# EUROPEAN PATENT SPECIFICATION

(11) **EP 2 636 890 B1**
(45) Date of publication and mention of the grant of the patent: **17.08.2016**
(21) Application number: 12158855.2
(22) Date of filing: 09.03.2012
(51) Int. Cl.: F03D 1/06, F03D 7/02

(54) **Rotor blade pitching arrangement**
Anordnung zum Verstellen des Anstellwinkels eines Rotorblatts
Agencement pour ajuster l'angle d'incidence de pale de rotor

(43) Date of publication of application: 11.09.2013
(73) Proprietor: Siemens Aktiengesellschaft, 80333 München (DE)
(72) Inventor: Stege, Jason, 7330 Brande (DK)

(56) References cited:
- DE-A1- 3 126 677
- US-A- 4 374 631
- US-A- 4 575 309
- US-A- 4 715 782
- US-A1- 2009 148 285

## Description

The invention describes a rotor blade pitching arrangement, a two-part wind turbine rotor blade, a wind turbine, and a method of adjusting a pitching angle of a two-part wind turbine rotor blade.

In prior art wind turbines, the pitching angle of a rotor blade is usually set by a pitch bearing arranged between a root of the rotor blade and the hub of the wind turbine. During operation of the wind turbine, the pitch bearing is used to rotate the rotor blade about an axis of rotation relative to the hub.

Generally, the blade root and the pitch bearing are circular, so that pitch bearing can effectively rotate the blade about an axis of rotation essentially perpendicular to-the hub. However, the ability of the wind turbine to extract energy from the air depends on the shape of the rotor blade, and a prior art rotor blade therefore generally comprises an airfoil shape over a significant portion of its length, starting at a "shoulder" or transition region between the necessarily circular pitch bearing end of the blade, where the airfoil shape is widest, and extending some or most of the way to the outer or tip end of the blade. Such an airfoil shape requires usually quite cost-intensive manufacturing techniques such as dedicated moulds for moulding a composite blade in the desired shape.

As wind turbines increase in size and power output, the rotor blades increase in length. Following the principles of the square-cube law, a longer blade generally implies increased surface area, increased volume and increased mass, and therefore also increased manufacturing costs. The generally hollow rotor blades require complex moulding processes to obtain a desired long but stable blade. A pitch system for such a long blade must also be equipped with a more powerful motor or other actuator to rotate the heavy rotor blade about its axis. Such pitch systems represent a considerable part of the overall cost of a wind turbine. Furthermore, a longer blade, with a correspondingly longer airfoil section, will also be subject to more loading along its length, and the increased loading may result in material failure of the blade or damage to the bearings.

It is therefore an object of the invention to provide an improved wind turbine rotor blade.

This object is achieved by the rotor blade pitching arrangement of claim 1; by the two-part wind turbine rotor blade of claim 6; by the wind turbine of claim 13, and by the method of claim 14 of adjusting a pitching angle.

According to the invention, the rotor blade pitching arrangement for a two-part wind turbine rotor blade comprises a fluid bearing realised to connect a tip blade part to a main blade part such that the tip blade part is rotatable relative to the main blade part about an axis of rotation; and a pitch angle adjusting means for obtaining a specific pitching angle for the tip blade part to increase and decrease a rotational speed of a rotor of the wind turbine.

The terms "main blade part" and "tip blade part" are to be understood as "inner" and "outer" blade parts respectively, i.e. the main blade part is mounted or connected to a hub of the wind turbine and comprises an inner portion of the rotor blade, while the tip blade part comprises an outer portion of the rotor blade.

An advantage of the rotor blade pitching arrangement according to the invention is that an adjustment of a pitching angle of only the tip blade part can suffice to increase or decrease the rotor speed during normal operation of the wind turbine. Such a wind turbine design can therefore dispense with an airfoil shape over the main blade part. Since it may be sufficient that only the tip blade part is given a significant airfoil shape for converting kinetic energy of the wind into rotational energy of the wind turbine rotor, such a blade design can be very economical to realise. Another advantage of the rotor blade pitching arrangement according to the invention is that a rotation of the tip blade part relative to the main blade part can be obtained with a favourably low effort, since a fluid bearing between the outer tip blade part and the main blade part can be realised to have very low or even negligible friction between any bearing surfaces, since such a fluid bearing is not subject to the high loads acting on a bearing of a prior art pitching system between a hub and an entire prior art blade as described in the introduction.

According to the invention, the two-part wind turbine rotor blade comprises a tip blade part, a main blade part and a fluid bearing realised to connect the tip blade part to the main blade part such that the tip blade part is rotatable relative to the main blade part about an axis of rotation; wherein the fluid bearing is realised for connection to a pitch angle adjusting means for obtaining a specific pitching angle of the tip blade part relative to the main blade part to increase and decrease a rotational speed of a rotor of the wind turbine.

An advantage of the rotor blade according to the invention is that it can be manufactured in a significantly more economical manner. Since a pitching of the tip blade section can suffice to control the rotational speed of the rotor, it may be sufficient to only provide this part of the two-part blade with a significant airfoil shape. The main part of the blade can have a simpler shape, can be considerably more economical to manufacture, and can also be significantly less massive than a prior art wind turbine rotor blade. Accordingly, such a two-part rotor blade according to the invention can be significantly lighter or less massive than a prior art rotor blade of the same length. Equally, a two-part rotor blade according to the invention can be significantly longer than a prior art rotor blade of the same mass, so that a wind turbine equipped with such longer blades can be more efficient and can generate more output power.

A fluid bearing for such a rotor blade pitching arrangement of such a two-part wind turbine rotor blade preferably comprises a moveable bearing part realised to be actuated by a pitch angle adjusting means of the rotor blade pitching arrangement such that a motion of the bearing part results in a corresponding rotation of the tip blade part relative to the main blade part about an axis of rotation to obtain a specific pitching angle of the tip blade part.

A significant advantage of such a fluid bearing is that, compared to other bearings such as ball bearings or needle bearings that require precisely machined parts and are therefore comparatively expensive, a fluid bearing is quite easy to manufacture at relatively low cost, and exhibits a very low degree of friction. Therefore, very little physical effort is required to actuate the moveable part of the bearing.

The fluid bearing can be connected or mounted in any suitable manner to the tip blade part such that a movement of the bearing part of the fluid bearing results in a corresponding rotation of the tip blade part, since the tip blade part is rotatably arranged relative to the main blade part. The fluid bearing can be arranged partially or wholly within the tip blade part.

According to the invention, the wind turbine comprises a number of such two-part wind turbine rotor blades arranged to rotate a rotor of the wind turbine, and wherein the speed of the rotor is increased and decreased according to a pitching angle of a tip blade part of a two-part rotor blade, also during normal operation of the wind turbine, and wherein the pitching angle of a tip blade part of a two-part rotor blade is controlled by a rotor blade pitching arrangement according to the invention.

An advantage of the wind turbine according to the invention is that, for the reasons given above, the efficiency and power output of the wind turbine can be significantly increased compared to wind turbines with prior art rotor blades of the same length or of the same mass as the two-part rotor blades. In a wind park comprising a multitude of such wind turbines, the overall power output can be significantly increased. Furthermore, the costs of manufacturing such a wind turbine can be reduced, since the two-part blades can be manufactured using less material and with less effort.

According to the invention, the method of adjusting a pitch angle of a two-part wind turbine rotor blade of a wind turbine according to the invention comprises the steps of determining a desired pitching angle for the tip blade part of a two-part rotor blade; determining an extent of motion of a moveable bearing part of the fluid bearing of the two-part blade to achieve that pitching angle; and controlling a pitch angle adjusting means of the rotor blade pitching arrangement accordingly.

An advantage of the method according to the invention is that a very precise control of the rotor speed of the wind turbine is possible. This is because the pitching angle of the outer part of the blade - i.e. the tip blade part - need only be slightly adjusted in order to obtain a significant increase in rotor speed, depending on the momentary requirements, or a decrease in rotor speed, if this is desired. A change in pitching angle at the outer region of a blade is more effective than changing the pitching angle of a lower region of the blade, as is known from the pitching systems of the prior art mentioned in the introduction.

Particularly advantageous embodiments and features of the invention are given by the dependent claims, as revealed in the following description. Features of different claim categories may be combined as appropriate to give further embodiments not described herein.

The terms "two-part blade" and "split blade" may be used interchangeably, in the following, and the terms "blade section" and "blade part" may be used interchangeably also. Of course, a blade part can comprise several parts joined together to act as a single blade part. According to the invention, the overall length of the split blade essentially comprises the combined lengths of the main blade part and the tip blade part. It may be assumed in the following - again without restricting the invention in any way - that the main blade part comprises a significantly greater mass than the tip blade part, and/or that the main blade part is significantly longer than the tip blade part. In a particularly preferred embodiment of the invention, the length of the main blade part comprises at least 60%, more preferably at least 75%, most preferably at least 90% of the overall blade length, and the remaining portion of the overall blade length is given in each case by the tip blade part.

The term "specific pitching angle" can be understood to mean a specific angle relative to a known reference, for example relative to a known reference position of the tip blade part relative to the main blade part. Equally, the term "specific pitching angle" can mean an angle with a measure of tolerance either side, for example ±0.5°, ±0.1°, etc., so that an acceptable degree of precision is obtained. Of course, the term "specific pitching angle" can also be understood to mean an angle that results in a desired rotational speed of a rotor of wind turbine generator. In this case the moveable bearing part can be repeatedly or continuously actuated by the pitch angle adjusting means until the desired rotational speed is obtained.

With the rotor blade pitching arrangement according to the invention, the extent of rotation of the tip blade part relative to the main blade part can be controlled in both directions, i.e. into the wind and out of the wind. Any suitable kind of fluid bearing can be implemented to allow the tip blade part to rotate about an axis of rotation relative to the main blade part. Since the bearing comprises a fluid bearing, the pitch angle adjusting means preferably comprises a fluid source for injecting a controlled volume of a pressurized fluid into the fluid bearing such that the tip blade part rotates relative to the main blade part, wherein a fluid volume is directly related to a pitching angle of the tip blade part relative to the main blade part. For example, to pitch the tip blade part into the wind so that the rotor rotational speed is increased, the fluid source of the rotor blade pitching arrangement can be controlled to force a fluid into the fluid bearing, such that the tip blade part is pitched into the wind. To pitch the tip blade part out of the wind (for example, to reduce the rotor rotational speed in a controlled manner), the fluid source can be controlled to reduce or halt a flow of pressurized fluid into the fluid bearing.

In the following, it may be assumed that the fluid bearing is a hydrostatic bearing. A fluid such as a suitable oil could be used to keep the bearing surfaces, or bearing pads, separate and to allow the tip section to rotate relative to the main blade section. However, in a particularly preferred embodiment of the invention, the fluid source comprises a source of pressurized air, and the fluid bearing comprises an aerostatic bearing. A bearing pad of such a fluid bearing is preferably made of polymer, or at least comprises a polymer layer on its inner surface, i.e. the surface facing into a cavity or air space between bearing surfaces. In the following therefore, without restricting the invention in any way, it may be assumed that the bearing is an aerostatic bearing and that the source of pressurized fluid is a compressed-air source. Preferably, the fluid bearing comprises a pair of bearing pads with opposing bearing faces, arranged between the main blade part and the tip blade part, such that one bearing pad is oriented towards the inner end of the rotor blade and the other bearing pad is oriented toward the outer end of the rotor blade. The fluid bearing can be realised such that both bearing pads are moveable, or such that one bearing pad remains stationary relative to the rotor blade while the other bearing pad can be moved in an "inward" or "outward" direction, for example toward or away from the stationary bearing pad. Preferably, the "inner" bearing pad is stationary, while the "outer" bearing pad is moveable relative to the inner pad.

During rotation of a wind turbine rotor blade, a centrifugal force acts in a radially outward direction on the tip blade part. According to a preferred embodiment of the invention, the rotor blade pitching arrangement makes use of this fact to efficiently control the pitching angle of the tip blade section, and the pitch angle adjusting means is realised to inject or force compressed or pressurized air into the fluid bearing in a direction essentially opposite to the direction of the centrifugal force acting on the tip blade part. When pressurized air is forced into the fluid bearing, the centrifugal force effectively assists the procedure, since it helps to "push" the moveable bearing pad in a radially outward direction.

The compressed-air source can be realised to release controlled amounts of pressurized air into the bearing, and can equally be realized to intake air from the bearing. To this end, the compressed-air source can comprise one or more valves arranged appropriately. The rotor blade pitching arrangement is preferably realised such that by injecting a controlled volume or controlled amount of pressurized air into the fluid bearing, the tip blade section is pitched into the wind. Of course, the pitch angle adjusting means can be realised to remove a volume of air from between the bearing pads in order to pitch the tip blade section out of the wind. A "controlled volume" of pressurized air can be released from the compressed air source or from the fluid bearing by, for example, opening a valve for a predetermined duration of time or until a pressure-sensing means such as a manometer indicates that the controlled volume has been released, etc.

Pitching the tip of a split rotor blade ensures a very good response to wind conditions. An optimal pitch angle for a certain wind speed - assuming the wind turbine is facing onto the wind - translates into a maximum rotational speed, so that the generator can operate at a favourably high efficiency. Therefore, if the pitching system is realised to respond quickly to an increase in the wind speed, the output of the generator can be increased accordingly. In a particularly preferred embodiment of the invention, therefore, the rotor blade pitching arrangement comprises a wind sensor arranged to detect a wind condition, and preferably connected to the compressed-air source so that this can respond accordingly. Equally, the rotor blade pitching arrangement can receive an input from, for example, a plant controller of the wind park, specifying that the rotor rotational speed should be adjusted to regulate the power.output of the wind turbine.

In a further preferred embodiment of the invention, the rotor blade pitching arrangement comprises a control unit for controlling the fluid source on the basis of a sensor output to achieve a desired pitching angle. This control unit can be realised as, for example, a micro-controller connected to the sensor output and arranged in the tip blade section. Of course, the control unit can be located at any suitable part of the wind turbine.

The fluid bearing can be realised to respond in a controlled manner to the pressure of the fluid being forced into it. For example, an increase in air pressure by a certain amount can be associated with an increase of the pitch angle by a corresponding fraction of a degree. For example, increasing the air pressure by a certain amount would result in a certain increase in pitch angle. Accordingly, allowing the air pressure to drop by the same amount would result in the tip blade section being pitched out of the wind by that amount.

Alternatively or in addition, the compressed-air source can be "informed" of the momentary pitch angle, and can increase or decrease the air pressure to alter the pitch angle as required. Therefore, in a preferred embodiment of the invention, the rotor blade pitching arrangement comprises a pitching angle sensor arranged to detect a momentary pitching angle of the tip blade part relative to the main blade part. For example, a suitable sensor or detector could be arranged in or on the tip blade section to determine the momentary position of the tip blade part relative to a reference position such as a default or furled position. This sensor can be connected to a control unit as described above, for controlling the compressed-air source.

In high wind conditions, the tip of the rotor blade can reach high speeds that could result in unwanted oscillations or even damage to the rotor blade, with ensuing damage to the rotor. Therefore, the rotor blade according to the invention preferably comprises a safety mechanism realised to pitch the rotor tip blade part out of the wind (i.e. to "furl" the rotor blade) under certain circumstances. Such a safety mechanism could also be actuated deliberately or automatically in the event of a fault in the rotor blade pitching system. To this end, depending on the bearing realisation, the safety mechanism can cause the rotating part of the fluid bearing - and therefore also the tip blade part - to return to a default or initial position. For example, the compressed-air source can stop the flow of pressurized air into the bearing, and any air in the bearing can be allowed to vacate the bearing. As a result, the bearing returns to its default position, and the tip blade part returns to its default position also. Even in the event of a fault in the compressed-air source or the duct leading to the inlet, any interruption of the pressurized air into the bearing will simply result in the tip blade section returning to its default position, so that the safety mechanism in this case is automatic. Such a default position might be a "resting" position of the bearing in which the bearing pads are essentially in contact with each other and are not separated by an air cushion.

The compressed-air source can be located close to the bearing. However, since a compressed-air source will likely have a significant weight, it may be preferable not to locate it in the blade itself. Therefore, the rotor blade according to the invention preferably comprises a fluid duct or air duct for connecting the inlet to the compressed-air source. Preferably, the air duct is arranged in the main blade part to extend from the compressed air source, which can be arranged in the hub or in the nacelle, to the fluid bearing, which can be arranged in the tip blade part. For example, such a duct can be incorporated inside the body of a blade part during or after the manufacture of a composite blade with an essentially hollow body section.

For added stability of the blade construction, in a preferred embodiment of the invention, the rotor blade comprises a stationary or fixed pivot rod arranged to extend at least partially into the tip blade part, and wherein the tip blade part is arranged to rotate about the pivot rod. The pivot rod can be made of any robust material, for example steel. The pivot rod can extend into the main blade part so that the main blade part and the tip blade part are connected in a colinear fashion. In such a realisation, the fluid bearing can comprise an essentially cylindrical shape, with the pivot rod extending through the centre of the fluid bearing, and the bearing pads can each comprise a disc shape with a circular opening to accommodate the pivot rod. The bearing can be realised to comprise a sleeve extending through its centre, dimensioned to fit closely about the pivot rod to minimize any play. Alternatively, the pivot rod can be mounted onto only the outer bearing pad, and the bearing pads can each comprise an uninterrupted circular disc shape. Of course, the bearing preferably comprises an air-tight seal so that essentially no air escapes from between the bearing pads.

A movement of a moveable bearing part, according to the invention, results in a rotation of the tip blade part. To this end, an outward radial motion of the moveable bearing part is preferably translated into a rotational motion of the tip blade section. Such a motion translation can be achieved in a number of ways. For example, a protruding pin arranged to travel along a helically arranged groove can translate a radial direction of motion of the moveable bearing part into a rotation of the tip blade section about its axis of rotation. This can take effect within the bearing itself. For example, a surface of the bearing can comprise a helical groove in the manner of a threaded groove, and the moveable bearing pad can comprise a pin arranged to move along this groove, thus compelling the moveable bearing pad to rotate. By mounting the tip blade part to this bearing pad, the tip blade part will also be compelled to rotate accordingly. The motion translation preferably allows any useful pitching angle to be achieved. For example, a pin and helical groove for motion translation can be realised to permit a pitching angle between 0° (furled position) and a maximum pitching position during normal operation, for example a few degrees, and an "extreme" or brake/stop angle of about 90°. The motion translation preferably comprises an infinite "resolution", so that any pitching angle or fraction of a pitching angle is obtainable over the allowable range.

Of course, a pivot rod could assist the motion of the moveable part of the bearing. For example, such a pin or helical groove of a motion translation means can be formed on the pivot, while the complementary part (groove or pin) of the motion translation means can be formed on a corresponding part of the moveable bearing pad.

A rotor blade of a wind turbine generally includes some kind of lightning protection system to provide a path to ground in the event of a lightning strike. Such a lightning protection system can comprise a metal conductor arranged along the outside of the rotor blade to the hub, where it is connected to a further conductor leading to ground. A preferred arrangement involves arranging the metal conductor inside the blade itself. Therefore, in a further preferred embodiment of the invention, if a pivot rod is used, it is incorporated into a lightning protection system of the rotor blade.

Occasionally, a bearing such as a fluid bearing may require maintenance, or a blade tip may become damaged. Therefore, in a particularly preferred embodiment of the invention, the tip blade part is releasably connected to the main blade part, so that the tip section can relatively easily be disconnected or dismounted from the main blade part and for repair or replacement by another tip section. To this end, the blade sections can be realised to comprise some kind of connecting means such as a flange connection, a bolted connection, a threaded connection, etc. Preferably, the connecting means is realised to maintain an essentially smooth surface contour over the blade outer surface. Preferably also, the connecting means is realised to be accessible from the outside, so that a maintenance worker can conveniently dismount the tip section from the main blade section as required.

A rotor blade is preferably essentially smooth over its entire surface, so that the aerodynamic properties of the blade are not compromised. Therefore, in a further preferred embodiment of the invention, the rotor blade comprises an essentially circular cross-sectional shape at a joint between the main blade part and the tip blade part. When the pitching angle is altered, the tip section rotates about the main blade section essentially without any interruption in a surface contour.

As indicated above, the rotor speed of the rotor can be regulated efficiently by adjusting the pitching angle of a tip blade section of the two-part blade according to the invention. The main blade part can be shaped with only a minor airfoil shape, and can be pitched to a lesser extent than a prior art rotor blade. However, in a particularly preferred embodiment of the invention, the main blade section is mounted in a stationary manner to the hub, i.e. the main blade part is not rotatable about an axis of rotation, and there is no pitch bearing between the main blade part and the hub. In such an embodiment, only the tip blade part of the split blade is pitched. This simplifies the design of the main blade part considerably. Preferably, the main blade part comprises a uniform cross-section essentially over its entire length, between the point at which it is mounted to the hub and a point approaching a joint or interface at which the main blade part is connected to the tip blade part. For example, the main blade part can have a circular cross-section, or preferably an elliptical or tear-drop cross-section for improved aerodynamic performance. Such an elliptical or tear-drop cross-section can transition smoothly into a circular cross-section at the point of connection to the tip blade part.

The tip blade part of the two-part blade according to the invention may at some point require maintenance. Therefore, in a particularly preferred embodiment of the invention, the two-part blade comprises a coupling means for coupling a hoisting apparatus to a blade part of the rotor blade. For example, since the tip section is preferably releasably mounted to the main blade section, the tip section could relatively easily be detached from the blade when this is "parked" in a downward position, and lowered to the ground or to a ship in the case of an offshore wind turbine. To this end, the coupling means could comprise brackets or hooks arranged in the body of the main blade section and the tip section. For example, a bracket can be set into the body of a blade section and covered, as long as it is not required, by a removable cover set into the blade surface. A maintenance worker can rappel from the hub down to the tip section, attach a cable or rope to the main blade section and also to the tip section, and can then disconnect the tip section from the main blade section. A block-and-tackle arrangement or other hoisting means can then be used to lower the tip section to ground, and the tip section is essentially suspended from the main blade section during the lowering manoeuvre. Evidently, a new or replacement tip section can be mounted to the main blade section in the same way, by lifting it into place where it can be mounted onto the main blade section.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Fig. 1 shows a prior art rotor blade of a wind turbine;
Fig. 2 shows a two-part rotor blade and a rotor blade pitching system according to a first embodiment of the invention;
Fig. 3 shows a wind turbine according to an embodiment of the invention;
Fig. 4 shows a maintenance procedure being carried out on a two-part rotor blade of a wind turbine according to a further embodiment of the invention.

In the diagrams, like numbers refer to like objects throughout. Objects in the diagrams are not necessarily drawn to scale.

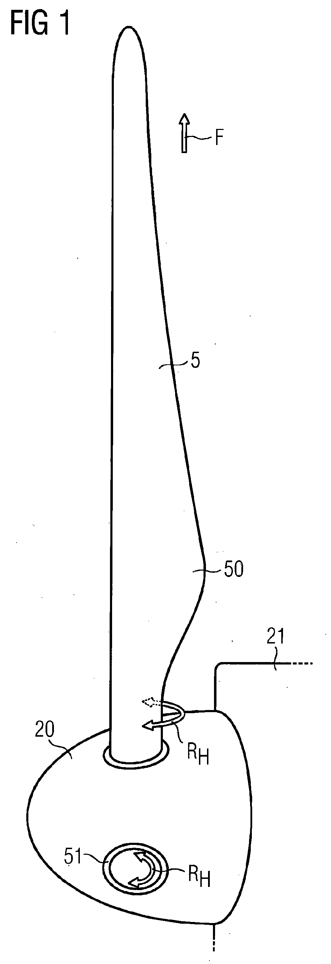

Fig. 1 shows a prior art rotor blade 5 mounted to a hub 20 of a wind turbine. The hub 20 rotates when wind is captured by the rotor blade 5, causing a rotor to rotate so that generator (not shown) located in a nacelle 21 can output electrical energy accordingly. To capture as much wind energy as possible, the blade 5 comprises a pronounced airfoil section 50 over a considerable part of its length. To be able to alter the pitching angle of the blade 5, it is connected to the hub 20 by means of a circular pitch bearing 51 driven by a motor (not shown). When the rotor blade 5 rotates, a centrifugal force acts on the blade outer end in the direction F shown. As explained in the above, such a prior art blade is expensive to manufacture. A long blade is correspondingly heavy and requires a powerful pitch motor and a large pitch bearing. The mass and cost increase essentially according to the square-cube law.

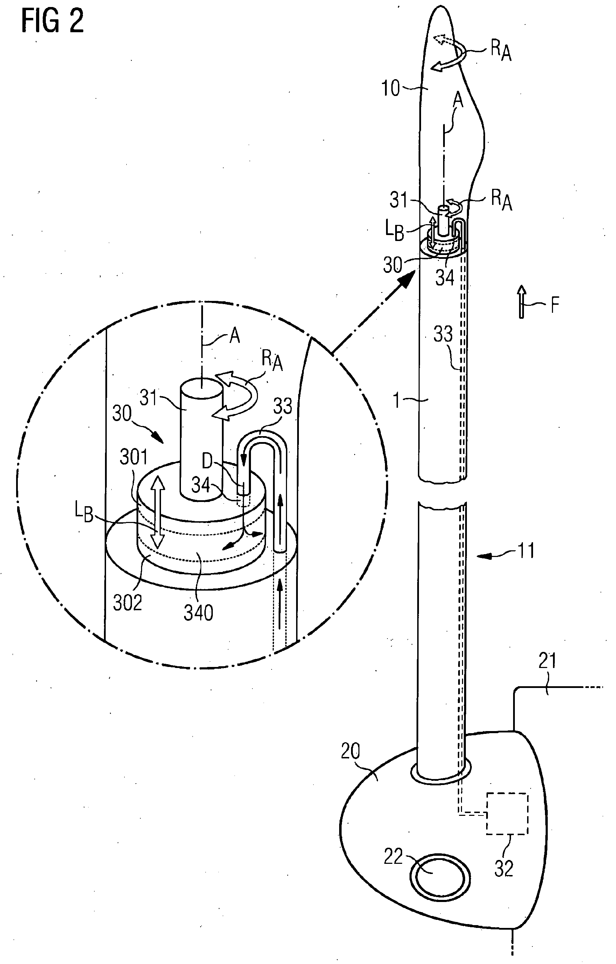

Fig. 2 shows a two-part rotor blade 1 and a rotor blade pitching system according to a first embodiment of the invention. Here, the rotor blade 1 comprises a long main blade part 11 with a uniform cross-section over most or all of its length, and a tip blade part 10 with an airfoil section shaped to allow wind energy to be extracted from the wind. The main blade part 11 is mounted in a fixed manner to the hub 20, without any pitch bearing. To this end, a connecting interface 21, for example a simple flange 21, can be arranged in or on the hub 20 to match the cross-sectional shape of the main blade part 11, which can be, for example, elliptical or tear-shaped. An interface between the main blade part 11 and the tip blade part 10 can be circular in cross-section.

The tip blade part 10 is rotatably mounted to the main blade part 11 by means of a bearing 30 and a pivot rod 31. The bearing 30 is a fluid bearing with a stationary bearing pad 302 and a moveable bearing pad 301. Here, the pivot rod 31 is embedded in the body of the tip blade part 10. A compressed air source 32 arranged in the hub 20 can force compressed air via an air duct 33 through an inlet 34 formed in the outer bearing pad 301 and into a space between bearing pads 301, 302 of the bearing 30 to form an air cushion 340. The compressed air is forced into the bearing 30 in a direction opposite to the direction F of the centrifugal force acting on the tip blade part 10. The bearing 30 and/or pivot rod is realised such that a motion of the outer bearing pad 301 in a radially outward direction D is translated into a rotation R_{A} of the pivot rod 31 and therefore also of the tip blade part 10 relative to the main blade part 11 about an axis of rotation A. With relatively little effort, therefore, the tip blade section 10 can be pitched at a desired angle into or out of the wind, as the need arises. The compressed air source 32 can be connected to such a bearing in each of the rotor blades (usually but not necessarily three) of a wind turbine.

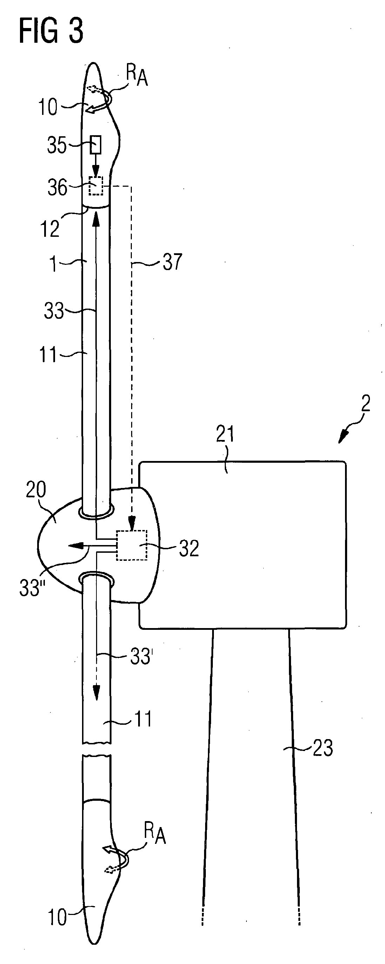

Fig. 3 shows a wind turbine 2 according to an embodiment of the invention. Here, three rotor blades 1 are connected to the hub 20 to turn a rotor of a generator located in the nacelle 21, which is mounted on a tower 23. A sensor 35, for example a strain gauge 35 or other suitable sensor 35, mounted on a two-part blade 1, can detect a wind strength. An output of this sensor 35 can be processed by a processor 36 to determine a momentary desired pitching angle. In this embodiment, the desired pitching angle is communicated to a compressed air source 32 in the hub 20 by means of a wireless signal 37. This can release controlled volumes of air via ducts 33, 33', 33'' to the fluid bearings 30 of the three blades 1, where a motion of a moveable bearing part is translated into a rotation of each tip blade part relative to its main blade part. Of course, a single such sensor 35 could be used to control the pitching of two or more tip blade sections 10 collectively, or each two-part blade 1 can be equipped with such a sensor 35 for individual control of the two-part blades 1.

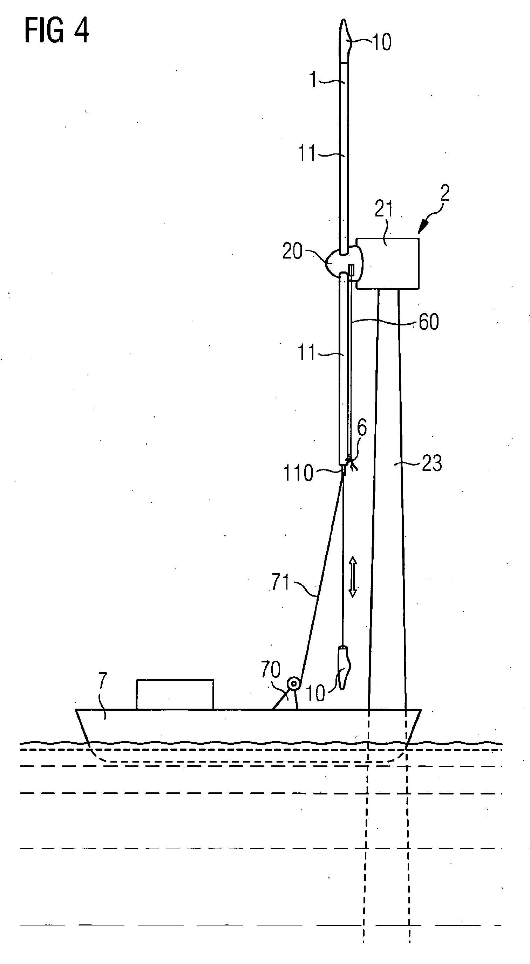

Fig. 4 shows a maintenance procedure being carried out on a two-part rotor blade 1 of a wind turbine 2 according to a further embodiment of the invention. Here, a maintenance vessel 7 has been directed to an offshore wind turbine. A maintenance technician has rappelled from an opening in the hub 20 to the lower or outer end of a downward-pointing two-part rotor blade 1. A cable 70 has been connected to a tip blade part 10 and to a winch 70 of the maintenance vessel 7 over a cable attachment means 110 on the main blade part 11. The maintenance technician has released the tip blade part 10 from the main blade part 11 so that the tip blade part 10 can be lowered to the vessel 7. In reverse order, a replacement tip blade part can be lifted into place for connection to the main blade part 11.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements.

## Claims

1. A rotor blade pitching arrangement for a two-part rotor blade (1) of a wind turbine (2), comprising
- a fluid bearing (30) realised to connect a tip blade part (10) of the two-part wind turbine rotor blade (1) to a main blade part (11) of the two-part wind turbine rotor blade (1) such that the tip blade part (10) is rotatable relative to the main blade part (11) about an axis of rotation (A); and
- a pitch angle adjusting means (32) for obtaining a specific pitching angle of the tip blade part (10) to increase and decrease a rotational speed of a rotor of the wind turbine (2).

2. A rotor blade pitching arrangement according to claim 1, wherein the pitch angle adjusting means (32) comprises a fluid source (32) for injecting a controlled volume of a pressurized fluid into the fluid bearing (30) such that the tip blade part (10) rotates relative to the main blade part (11), wherein a fluid volume is directly related to a pitching angle of the tip blade part (10) relative to the main blade part (11).

3. A rotor blade pitching arrangement according to claim 2; wherein the pitch angle adjusting means (32) is realised to inject the fluid into the fluid bearing (30) in a direction essentially opposite to the direction of a centrifugal force (F) acting on the tip blade part (10) during a rotation of the two-part blade (1).

4. A rotor blade pitching arrangement according claim 2 or claim 3, wherein the fluid source (32) comprises a source of pressurized air.

5. A rotor blade pitching arrangement according to any of claims 2 to 4, comprising a control unit (36) for controlling the fluid source (32) on the basis of a sensor output (37) to achieve a desired pitching angle.

6. A two-part wind turbine rotor blade (1) comprising a tip blade part (10), a main blade part (11) and a fluid bearing (30) realised to connect the tip blade part (10) to the main blade part (11) such that the tip blade part (10) is rotatable relative to the main blade part (11) about an axis of rotation (A); wherein the fluid bearing (30) is realised for connection to a pitch angle adjusting means (32) for obtaining a specific pitching angle of the tip blade part (10) to increase and decrease a rotational speed of a rotor of the wind turbine (2).

7. 11 two-part rotor blade according to claim 6, wherein the fluid bearing (30) comprises an inlet (34) for the injection of a pressurized fluide (340) from a fluid source (32) into the fluid bearing (30) in a direction (D) essentially opposite to the direction of a centrifugal force (F) acting on the tip blade part (10) during rotation of the two-part blade (1).

8. A two-part rotor blade according to claim 7, comprising a fluid duct (33) for connecting the fluid inlet (34) to the pressurized fluid source (33), wherein the fluid duct (33) is arranged to extend from a lower end of the main blade part (11) through a body of the main blade part (11) to the inlet (43) of the fluid bearing (30).

9. A two-part rotor blade according to any of claims 6 to 8, wherein the tip blade part (10) is arranged to rotate about a pivot rod (31) arranged to extend at least partially into the tip blade part (10).

10. A two-part rotor blade according to claim 9, wherein the pivot rod (31) is incorporated into a lightning protection system of the rotor blade (1).

11. A two-part rotor blade according to any of claims 6 to 10, wherein the main blade part (11) comprises an essentially uniform cross-section between an inner end and an outer end of the main blade part (11).

12. A two-part rotor blade according to any of claims 6 to 11, wherein an interface (12) between the main blade part (11) and the tip blade part (10) comprises an essentially circular cross-section.

13. A wind turbine (2) comprising a number of two-part wind turbine rotor blades (1) according to any of claims 6 to 12 arranged to rotate a rotor of the wind turbine (2), and wherein the speed of the rotor is increased and decreased according to a pitching angle of a tip blade part (10) of a two-part rotor blade (1), and wherein the pitching angle of a tip blade part (10) of a two-part rotor blade (1) is controlled by a rotor blade pitching arrangement according to any of claims 1 to 5.

14. A method of adjusting a pitching angle of a two-part wind turbine rotor blade (1) of a wind turbine (2) according to claim 13, which method comprises the steps of
- determining a desired pitching angle for the tip blade part (10) of a two-part rotor blade (1);
- determining an extent of motion of a moveable bearing part (301) of the fluid bearing (30) of the two-part blade (1) to achieve that pitching angle; and
- controlling a pitch angle adjusting means (32) of the rotor blade pitching arrangement accordingly to actuate the moveable bearing part (301) of the fluid bearing (30) by that extent of motion.

## Patentansprüche

1. Rotorblattanstellanordnung für ein zweiteiliges Rotorblatt (1) einer Windturbine (2) mit
- einem Fluidlager (30), das so ausgelegt ist, dass es einen Blattspitzenteil (10) des zweiteiligen Windturbinenrotorblatts (1) so mit einem Blatthauptteil (11) des zweiteiligen Windturbinenrotorblatts (1) verbindet, dass der Blattspitzenteil (10) in Bezug auf den Blatthauptteil (11) um eine Rotationsachse (A) drehbar ist, und
- einem Anstellwinkelverstellmittel (32) zum Erzielen eines bestimmten Anstellwinkels des Blattspitzenteils (10) zwecks Erhöhen und Verringern einer Drehzahl eines Rotors der Windturbine (2).

2. Rotorblattanstellanordnung nach Anspruch 1, bei der das Anstellwinkelverstellmittel (32) eine Fluidquelle (32) umfasst, die ein geregeltes Volumen an Druckfluid in das Fluidlager (30) einspeist, so dass sich der Blattspitzenteil (10) in Bezug zum Blatthauptteil (11) dreht, wobei ein Fluidvolumen in einem direkten Verhältnis zu einem Anstellwinkel des Blattspitzenteils (10) in Bezug zum Blatthauptteil (11) steht.

3. Rotorblattanstellanordnung nach Anspruch 2, bei der das Anstellwinkelverstellmittel (32) so ausgelegt ist, dass es das Fluid in einer Richtung in das Fluidlager (30) einspeist, die der Richtung einer Zentrifugalkraft (F), die bei einer Drehung des zweiteiligen Blatts (1) auf den Blattspitzenteil (10) einwirkt, im Wesentlichen entgegengesetzt ist.

4. Rotorblattanstellanordnung nach Anspruch 2 oder 3, bei der die Fluidquelle (32) eine Druckluftquelle umfasst.

5. Rotorblattanstellanordnung nach einem der Ansprüche 2 bis 4, die eine Steuereinheit (36) umfasst, welche die Fluidquelle (32) auf der Grundlage eines Sensorausgangssignals (37) so steuert, dass ein Sollanstellwinkel erzielt wird.

6. Zweiteiliges Windturbinenrotorblatt (1) mit einem Blattspitzenteil (10), einem Blatthauptteil (11) und einem Fluidlager (30), das so ausgelegt ist, dass es den Blattspitzenteil (10) so mit dem Blatthauptteil (11) verbindet, dass der Blattspitzenteil (10) in Bezug auf den Blatthauptteil (11) um eine Rotationsachse (A) drehbar ist, wobei das Fluidlager (30) für die Verbindung mit einem Anstellwinkelverstellmittel (32) zum Erzielen eines bestimmten Anstellwinkels des Blattspitzenteils (10) zwecks Erhöhen und Verringern einer Drehzahl eines Rotors der Windturbine (2) ausgelegt ist.

7. Zweiteiliges Rotorblatt nach Anspruch 6, bei dem das Fluidlager (30) einen Einlass (34) zum Einspeisen eines Druckfluids (340) aus einer Fluidquelle (32) in einer Richtung (D) in das Fluidlager (30) umfasst, die der Richtung einer Zentrifugalkraft (F), die bei einer Drehung des zweiteiligen Blatts (1) auf den Blattspitzenteil (10) einwirkt, im Wesentlichen entgegengesetzt ist.

8. Zweiteiliges Rotorblatt nach Anspruch 7, das eine Fluidleitung (33) zum Verbinden des Fluideinlasses (34) mit der Druckfluidquelle (32) umfasst, wobei die Fluidleitung (33) so angeordnet ist, dass sie von einem unteren Ende des Blatthauptteils (11) aus durch einen Körper des Blatthauptteils (11) zum Einlass (43) des Fluidlagers (30) verläuft.

9. Zweiteiliges Rotorblatt nach einem der Ansprüche 6 bis 8, bei dem der Blattspitzenteil (10) so angeordnet ist, dass er sich um eine Schwenkachse (31) dreht, die so angeordnet ist, dass sie zumindest teilweise in den Blattspitzenteil (10) hinein verläuft.

10. Zweiteiliges Rotorblatt nach Anspruch 9, bei dem die Schwenkachse (31) in ein Blitzschutzsystem des Rotorblatts (1) integriert ist.

11. Zweiteiliges Rotorblatt nach einem der Ansprüche 6 bis 10, bei dem der Blatthauptteil (11) zwischen einem inneren Ende und einem äußeren Ende einen im Wesentlichen gleichförmigen Querschnitt umfasst.

12. Zweiteiliges Rotorblatt nach einem der Ansprüche 6 bis 11, bei dem eine Verbindungsstelle (12) zwischen dem Blatthauptteil (11) und dem Blattspitzenteil (10) einen im Wesentlichen runden Querschnitt umfasst.

13. Windturbine (2) mit einer Anzahl zweiteiliger Windturbinenrotorblätter (1) nach einem der Ansprüche 6 bis 12, die so angeordnet sind, dass sie einen Rotor der Windturbine (2) drehen, wobei die Drehzahl des Rotors gemäß einem Anstellwinkel eines Blattspitzenteils (10) eines zweiteiligen Rotorblatts (1) erhöht und verringert und der Anstellwinkel eines Blattspitzenteils (10) eines zweiteiligen Rotorblatts (1) durch eine Rotorblattanstellanordnung nach einem der Ansprüche 1 bis 5 geregelt wird.

14. Verfahren zum Verstellen eines Anstellwinkels eines zweiteiligen Windturbinenrotorblatts (1) einer Windturbine (2) nach Anspruch 13, das folgende Schritte umfasst:
- Bestimmen eines Sollanstellwinkels für den Blattspitzenteil (10) eines zweiteiligen Rotorblatts (1),
- Bestimmen eines Ausmaßes an Bewegung eines beweglichen Lagerteils (301) des Fluidlagers (30) des zweiteiligen Blatts (1) zum Erzielen dieses Anstellwinkels und
- entsprechendes Steuern eines Anstellwinkelverstellmittels (32) der Rotorblattanstellanordnung, so dass der bewegliche Lagerteil (301) des Fluidlagers (30) um dieses Ausmaß in Bewegung versetzt wird.

## Revendications

1. Agencement de calage de pale de rotor pour une pale (1) en deux parties de rotor d'une éolienne (2), comprenant
- un palier fluide (30) réalisé pour connecter une partie (10) d'extrémité de pale de la pale (1) en deux parties de rotor d'éolienne à une partie principale (11) de pale de la pale (1) en deux parties de rotor d'éolienne de telle sorte que la partie (10) d'extrémité de pale est rotative par rapport à la partie (11) principale de pale autour d'un axe de rotation (A) ; et
- un moyen (32) d'ajustement d'angle de calage pour obtenir un angle de calage spécifique de la partie (10) d'extrémité de pale pour augmenter et diminuer une vitesse de rotation d'un rotor de l'éolienne (2).

2. Agencement de calage de pale de rotor selon la revendication 1, dans lequel le moyen (32) d'ajustement d'angle de calage comprend une source (32) de fluide pour injecter un volume contrôlé d'un fluide sous pression dans le palier fluide (30) de telle sorte que la partie (10) d'extrémité de pale tourne par rapport à la partie (11) principale de pale, dans lequel un volume de fluide est directement en relation avec un angle de calage de la partie (10) d'extrémité de pale par rapport à la partie (11) principale de pale.

3. Agencement de calage de pale de rotor selon la revendication 2, dans lequel le moyen (32) d'ajustement d'angle de calage est réalisé pour injecter le fluide sur le palier fluide (30) dans un sens essentiellement opposé au sens d'une force centrifuge (F) agissant sur la partie (10) d'extrémité de pale lors d'une rotation de la pale (1) en deux parties.

4. Agencement de calage de pale de rotor selon la revendication 2 ou la revendication 3, dans lequel la source (32) de fluide comprend une source d'air sous pression.

5. Agencement de calage de pale de rotor selon l'une quelconque des revendications 2 à 4, comprenant une unité (36) de commande pour commander la source (32) de fluide sur la base d'une sortie (37) de capteur pour parvenir à un angle de calage désiré.

6. Pale (1) en deux parties de rotor d'éolienne comprenant une partie (10) d'extrémité de pale, une partie (11) principale de pale et un palier fluide (30) réalisé pour connecter la partie (10) d'extrémité de pale à la partie (11) principale de pale de telle sorte que la partie (10) d'extrémité de pale est rotative par rapport à la partie (11) principale de pale autour d'un axe de rotation (A) ; dans laquelle le palier fluide (30) est réalisé pour une connexion à un moyen (32) d'ajustement d'angle de calage pour obtenir un angle de calage spécifique de la partie (10) d'extrémité de pale pour augmenter et diminuer une vitesse de rotation d'un rotor de l'éolienne (2).

7. Pale en deux parties de rotor selon la revendication 6, dans laquelle le palier fluide (30) comprend une entrée (34) pour l'injection d'un fluide sous pression (340) depuis une source (32) de fluide dans le palier fluide (30) dans un sens (D) essentiellement opposé au sens d'une force centrifuge (F) agissant sur la partie (10) d'extrémité de pale lors d'une rotation de la pale (1) en deux parties.

8. Pale en deux parties de rotor selon la revendication 7, comprenant une conduite (33) de fluide pour connecter l'entrée (34) de fluide à la source (32) de fluide sous pression, dans laquelle la conduite (33) de fluide est agencée pour s'étendre d'une extrémité inférieure de la partie (11) principale de pale à travers un corps de la partie (11) principale de pale jusqu'à l'entrée (43) du palier fluide (30).

9. Pale en deux parties de rotor selon l'une quelconque des revendications 6 à 8, dans laquelle la partie (10) d'extrémité de pale est agencée de façon à tourner autour d'une tige pivot (31) agencée pour s'étendre au moins partiellement dans la partie (10) d'extrémité de pale.

10. Pale en deux parties de rotor selon la revendication 9, dans laquelle la tige pivot (31) est incorporée dans un système de protection contre la foudre de la pale (1) de rotor.

11. Pale en deux parties de rotor selon l'une quelconque des revendications 6 à 10, dans laquelle la partie (11) principale de pale comprend une section transversale essentiellement uniforme entre une extrémité intérieure et une extrémité extérieure de la partie (11) principale de pale.

12. Pale en deux parties de rotor selon l'une quelconque des revendications 6 à 11, dans laquelle une interface (12) entre la partie (11) principale de pale et la partie (10) d'extrémité de pale comprend une section transversale essentiellement circulaire.

13. Éolienne (2) comprenant un certain nombre de pales (1) en deux parties de rotor d'éolienne selon l'une quelconque des revendications 6 à 12 agencées pour faire tourner un rotor de l'éolienne (2), et dans laquelle la vitesse du rotor est augmentée et diminuée en fonction d'un angle de calage d'une partie (10) d'extrémité de pale d'une pale (1) en deux parties de rotor, et dans laquelle l'angle de calage d'une partie (10) d'extrémité de pale d'une pale (1) en deux parties de rotor est commandé par un agencement de calage de pale de rotor selon l'une quelconque des revendications 1 à 5.

14. Procédé d'ajustement d'un angle de calage d'une pale (1) en deux parties de rotor d'éolienne d'une éolienne (2) selon la revendication 13, lequel procédé comprend les étapes de
- détermination d'un angle de calage désiré pour la partie (10) d'extrémité de pale d'une pale (1) en deux parties de rotor ;
- détermination d'une étendue de mouvement d'une partie (301) mobile de palier du palier fluide (30) de la pale (1) en deux parties pour parvenir à cet angle de calage ; et
- commande d'un moyen (32) d'ajustement d'angle de calage de l'agencement de calage de pale de rotor en conséquence pour actionner la partie (301) mobile de palier du palier fluide (30) de cette étendue de mouvement.
